# EUROPEAN PATENT APPLICATION

(11) **EP 4 796 993 A1**
(43) Date of publication of application: **26.08.2026**
(21) Application number: 23798821.7
(22) Date of filing: 18.10.2023
(51) Int. Cl.: G02F 1/21, G02B 6/12, G02B 6/293, G02B 6/43, G02F 1/313, G02F 1/365

(54) **PHOTONIC WAVEGUIDE MESH ARRANGEMENTS AND FIELD PROGRAMMABLE PHOTONIC GATE ARRAY (FPPGA) COMPRISING THE SAME**

(71) Applicant: Universitat Politècnica de València, 46022 Valencia (ES)
(72) Inventor: CAPMANY FRANCOY, José, 46022 Valencia (ES); GASULLA MESTRE, Ivana, 46022 Valencia (ES); CATALÁ LAHOZ, Cristina, 46022 Valencia (ES)
(74) Representative: Pons IP
(86) International application number: PCT/ES2023/070615
(87) International publication number: WO 2025/083295

(57) **Abstract**

Photonic waveguide mesh arrangement for a Field Programmable Photonic Gate Array (FPPGA) comprising: a plurality of hexagonal cells comprising two right sides of length L, an upper side of length L, a lower side of length L and two left sides of length L; and a plurality of defect cells comprising two right sides of length L parallel each one of them to each of the two right sides of the hexagonal cells or to each of the two left sides of the hexagonal cells, an upper side parallel to the upper side of the hexagonal cells, a lower side parallel to the lower side of the hexagonal cells and two left sides of length L parallel each one of them to each of the two right sides of the hexagonal cells or to each of the two left sides of the hexagonal cells; wherein the length of the upper side and lower side of the defect cells is greater or lower than L.

## Description

### OBJECT OF THE INVENTION

The invention is related to the field of integrated circuits and, more particularly, to the field of Programmable Integrated Photonics (PIP).

An object of the invention is Photonic Waveguide Mesh Arrangements for improving the properties of a Field Programmable Photonic Gate Array (FPPGA).

Other object of the invention is a Field Programmable Photonic Gate Array (FPPGA) comprising the Photonic Waveguide Mesh Arrangements.

### BACKGROUND OF THE INVENTION

Programmable integrated photonics (PIP) is an emerging new paradigm that aims at designing common integrated optical hardware resource configurations, capable of implementing an unconstrained variety of functionalities by suitable programming.

Recently a Field Programmable Photonic Gate Array (FPPGA) has been introduced in the state of the art.

The FPPGA has a similar rationale as the FPGA in electronics, that is, a common hardware is designed to provide several resources that can be employed to implement different functionalities by means of programming. However, the FPPGA is different from the FPGA in the sense that it does not carry digital logic operations rather, it exploits optical interference to perform very high-speed analog operations acting over the phase and amplitudes of optical signals in a controlled environment.

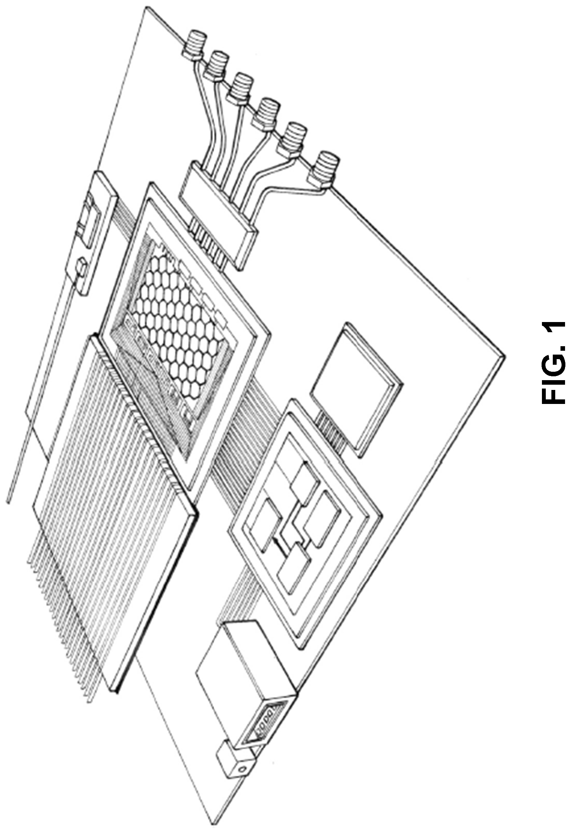

Figure 1 shows the FPPGA device's general layout. Also, a detailed description of the technology stack and the silicon photonic programmable core are shown by Figure 1.

The FPPGA has a programmable photonic core driven and monitored by control and RF electronics, optical, and RF input/output ports. Software algorithms and programming layers give the user access to the photonic functionality.

Nevertheless, the typical achievable length and propagation delay in a cell unit of a programmable photonic waveguide mesh of a FFPGA are fixed and limit the flexibility in the spectral and time domain responses of the circuits that can be implemented.

### DESCRIPTION OF THE INVENTION

A FFPGA has a programmable photonic waveguide mesh. The photonic waveguide mesh has a regular and periodic geometry, formed by replicating unit cells.

Usually, these cells take the form of a rectangles or hexagons, where each side of the cell is formed by two integrated waveguides connected by means of a balanced Mach-Zehnder interferometer (MZI) that can be operated by means of an output control signal as a crossbar switch or as a variable coupler with independent power division ratio and phase shift. Additional elements of the photonic core are the high-performance blocks (HPBs), these are specific circuits that cannot be incorporated into the mesh like sources, modulators, and detectors.

A typical achievable cell in silicon photonics has a side length Lₛ around 450 mm providing a propagation delay Tₛ around 11,5 psec. **These values are fixed and limit the flexibility in the spectral and time domain responses of the circuits that can be implemented**.

Therefore, the present invention is directed to develop and demonstrate solutions that overcome the limited flexibility in the spectral period and sampling time values that FPPGAs can provide by providing a photonic waveguide mesh arrangement to implement the photonic core which overcomes said limitations and which can be easily incorporated into existing mesh designs.

Thus, the proposed solution consists in embedding defect cells into a uniform 2D hexagonal or rectangular waveguide mesh. These defect cells are compatible and easily integrable into the uniform waveguide mesh.

The present invention relates to photonic waveguide mesh arrangements incorporating the defect cells. Four different approaches are defined.

In a first approach, the photonic waveguide mesh arrangement of the invention comprises a plurality of hexagonal cells and a plurality of defect cells.

The hexagonal cells comprise two right sides of length L, an upper side of length L, a lower side of length L and two left sides of length L.

The defect cells comprise two right sides of length L parallel each one of them to each of the two right sides of the hexagonal cells or to each of the two left sides of the hexagonal cells, an upper side parallel to the upper side of the hexagonal cells, a lower side parallel to the lower side of the hexagonal cells and two left sides of length L parallel each one of them to each of the two right sides of the hexagonal cells or to each of the two left sides of the hexagonal cells.

In the defect cells the length of the upper side and lower side of the defect cells could be greater or lower than L, thus solving the problem of spectral limitation.

The inclusion of defect cells solves the problem of spectral period limitation through the exploitation of the Vernier effect. The individual cavities of the uniform and defect cells have slightly dissimilar Spectral periods or Free Spectral Range. When coupled only the common resonances to both cavities are enabled and this allows to extend the spectral period to a value given by: ${FSR}_{T} = \frac{{FSR}_{1} ⋅ {FSR}_{2}}{\left|{FSR}_{1}-{FSR}_{2}\right|}$

The defect cells of the photonic waveguide mesh arrangement of the invention could be connected to the hexagonal cells, could be connected between them or could be connected to both hexagonal cells and defect cells.

In preferred embodiments, the defect cells are connected between them forming a at least one row or at least one column.

In said case, a row or column of defect cells could be connected to a row or column of hexagonal cells or to another row or column of defect cells.

Also, one or more rows or columns of defect cells could be connected to one or more rows or columns of hexagonal cells in a periodic basis.

The defect cells of each of the rows or columns of defect cells could be defect cells with the length of the upper side and lower side greater than L or with the length of the upper side and lower side lower than L.

Also, the defect cells of at least one row or column of defect cells could have:
- the two right sides parallel to the two left sides of the hexagonal cells; and
- the two left sides parallel to the two right sides of the hexagonal cells;
thus, forming an hourglass shape.

In said cases, the row or column of defect cells could be connected to a row or column of hexagonal cells or a row or column of defect cells.

In a second approach, the photonic waveguide mesh arrangement for a Field Programmable Photonic Gate Array (FPPGA) of the invention could comprise:
- a plurality of quadrangular cells comprising two lateral sides of length L, an upper side of length L and a lower side of length L; and
- a plurality of defect cells comprising two lateral sides of length L parallel to the lateral sides of the quadrangular cells, an upper side and a lower side parallel to the upper side and a lower side of the quadrangular cells
wherein the length of the upper side and lower side of the defect cells could be greater or lower than L, thus forming a rectangular shape.

As explained before, in this case, the defect cells could also be connected between them forming a at least one row or at least one column.

The rows or columns of defect cells could be connected to a row or column of quadrangular cells or to another row or column of defect cells.

In a third approach, the photonic waveguide mesh arrangement of the invention comprises:
- a plurality of hexagonal cells; and
- a plurality of hexagonal split cells comprising six sides of length L and six vertexes, wherein the sides connect consecutive vertexes.

In this approach, the hexagonal split cells further comprise one or more internal sides connecting no-consecutive vertexes.

For example, the hexagonal split cells can comprise one internal side connecting two non-consecutive vertexes, forming a triangle and a pentagon or two quadrilaterals.

Alternatively, the hexagonal split cells can comprise two internal sides, which do not intersect each other. In this case, each internal side connects two non-consecutive vertexes, forming two triangles and a quadrilateral.

In this approach, the internal side causes that the perimeter of the hexagonal split cells varies. The hexagonal split cell works as two or three different cells and, therefore, the total perimeter is the sum of the perimeter of each of the different cells. Consequently, each internal side increases the perimeter of the hexagonal split cell two times the length of said internal side.

The hexagonal split cells could be connected to the hexagonal cells or between them in different positions, such that each position causes a different Free Spectral Range value.

In a fourth approach, the photonic waveguide mesh arrangement comprises:
- a plurality of quadrangular cells; and
- one or more quadrangular split cells comprising four sides of length L and four vertexes, wherein the sides connect consecutive vertexes.

In this approach, the quadrangular split cells further comprise one internal side connecting no-consecutive vertexes.

In this approach, the internal side also causes that the perimeter of the quadrangular split cells varies. The quadrangular split cell works as two triangular cells and, therefore, the total perimeter is the sum of the perimeter of each of the triangular cells. Consequently, the internal side increases the perimeter of the quadrangular split cell in a value equal to (2√2)L.

Preferably, in the photonic waveguide mesh arrangements of the invention each side and each internal side of the hexagonal cells, defect cells and split cells comprises two integrated waveguides connected by means of a balanced Mach-Zehnder interferometer (MZI).

The invention also relates to a Field Programmable Photonic Gate Array (FPPGA) comprising the photonic waveguide mesh arrangements described.

### DESCRIPTION OF THE DRAWINGS

In order to complement the description being made and with the object of helping to better understand the features of the invention, in accordance with a preferred practical exemplary embodiment thereof, said description is accompanied, as an integral part thereof, by a set of drawings where, in an illustrative and non-limiting manner, the following has been represented:
Figure 1. Shows an example of a Field Programmable Photonic Gate Array (FPPGA) according to the invention.
Figure 2. Shows a detail of a photonic core of the Field Programmable Photonic Gate Array (FPPGA) shown in figure 1.
Figure 3. Shows an example of a first preferred embodiment of the invention wherein multiple different defect cells are connected to multiple quadrangular cells.
Figure 4. Shows an example of a first preferred embodiment of the invention wherein multiple rows of defect cells are connected to a row of quadrangular cells.
Figure 5. Shows an example of a second preferred embodiment of the invention wherein a first defect cell is connected to a hexagonal cell.
Figure 6. Shows an example of a second preferred embodiment of the invention wherein a second defect cell is connected to an hexagonal cell.
Figure 7. Shows an example of a second preferred embodiment of the invention wherein a row of defect cells is connected to multiple rows of hexagonal cells.
Figure 8. Shows an example of a second preferred embodiment of the invention wherein multiple rows of defect cells are connected to multiple rows of hexagonal cells in a periodic way.
Figure 9. Shows an example of a second preferred embodiment of the invention wherein multiple rows of defect cells are connected between them, forming a first group, and said first group is connected to multiple rows of hexagonal cells, forming a second group.
Figure 10. Shows an example of a second preferred embodiment of the invention wherein multiple rows of different defect cells are connected to multiple rows of hexagonal cells.
Figure 11. Shows an example of a second preferred embodiment of the invention wherein a first type of hourglass defect cell is connected to a hexagonal cell.
Figure 12. Shows an example of a second preferred embodiment of the invention wherein a second type of hourglass defect cell is connected to a hexagonal cell.
Figure 13. Shows a comparison between the spectral domain response of an hexagonal cell, a defect cell and a combination of a hexagonal and a defect cell, in a second preferred embodiment of the invention.
Figure 14. Shows a connection of a hexagonal cell with a hexagonal split cell comprising one internal side forming two trapezoids.
Figure 15. Shows a first connection of a hexagonal cell with a hexagonal split cell comprising one internal side forming a triangle and a quadrilateral.
Figure 16. Shows a second connection of a hexagonal cell with a hexagonal split cell comprising one internal side forming a triangle and a quadrilateral.
Figure 17. Shows a connection of a hexagonal cell with a hexagonal split cell comprising two internal sides forming two triangles and a rectangle.
Figure 18. Shows a connection of a hexagonal cell with a hexagonal split cell comprising two internal sides forming two triangles and a trapezoid.
Figure 19. Shows a photonic waveguide mesh arrangement comprising four types of hexagonal split cells.
Figure 20. Shows an example of a quadrangular split cell.

### PREFERRED EMBODIMENT OF THE INVENTION

The invention relates to a Field Programmable Photonic Gate Array (FPPGA) characterized in that comprises photonic waveguide mesh arrangements comprising defect cells.

The Figure 1 shows an exemplary of a Field Programmable Photonic Gate Array (FPPGA) according to the invention, which comprises photonic I/O ports, a photonic core, RF electronics, RF I/O ports and control electronics. The photonic core is connected to the photonic I/O ports, the control electronics and the RF electronics, which in turn are connected to the RF I/O ports.

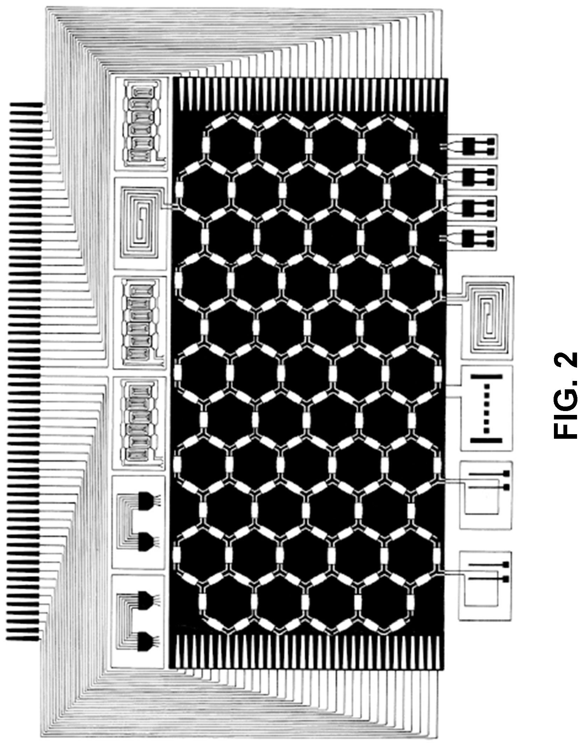

The Figure 2 shows a detail of the photonic core shown in figure 1. The photonic core comprises connections to the photonic I/O ports, high performance external blocks and a waveguide mesh, which connected the photonic I/O ports with the high performance external blocks.

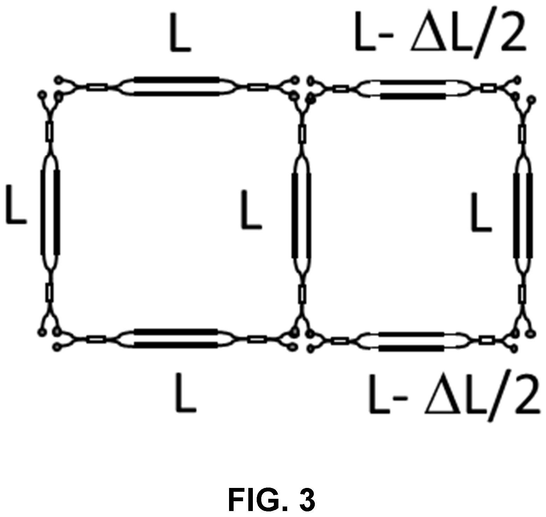

The Figure 3 shows an example of a first preferred embodiment of a photonic waveguide mesh arrangement of the invention.

In said photonic waveguide mesh arrangement multiple different defect cells are connected to multiple quadrangular cells. The quadrangular cells have each one four sides of length L.

The defect cells are rectangular cells comprising an upper side and a lower side which could be greater or smaller than L.

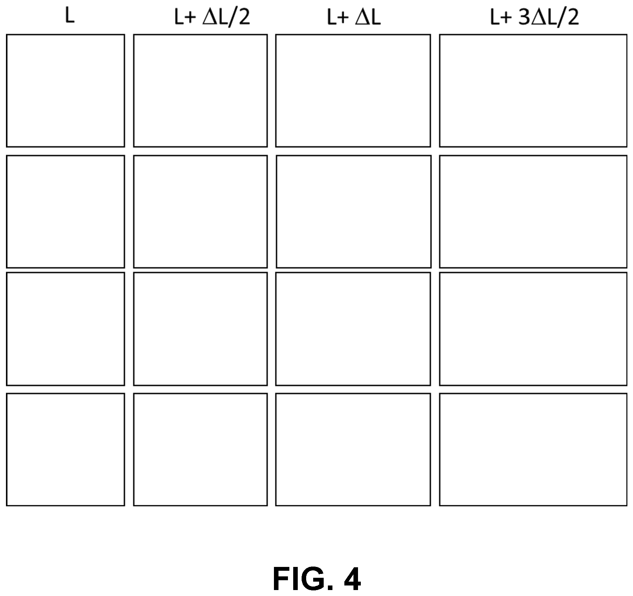

As shown in Figure 4, the defect cells could be combined to conform a row of defect cells. Thus, Figure 4 shows multiple rows of defect cells connected to a row of quadrangular cells. The multiple rows of defect cells of figure 4 includes rectangular cells comprising an upper side and a lower side of lengths: L+(ΔL/2), L+(ΔL) and L+(3ΔL/2).

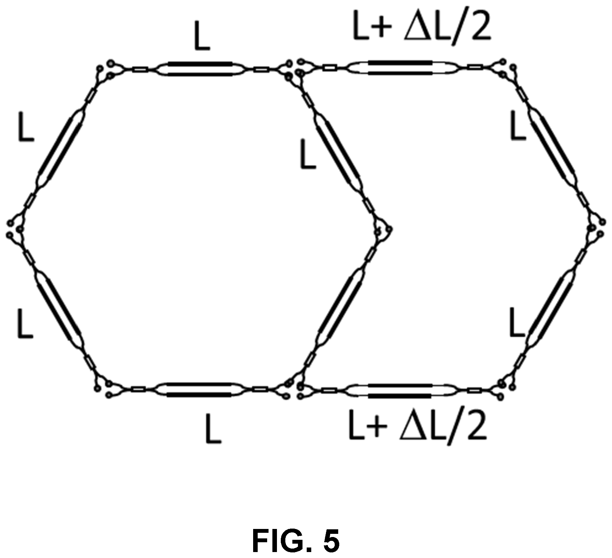

Figure 5 shows an example of a second preferred embodiment of the invention wherein the defect cell is connected to a hexagonal cell.

The hexagonal cell has six sides of length L, two right sides, two left sides, an upper side and a lower side. In this case, the defect cell has also six sides, with four of them having exactly the same length L as that of the sides in the uniform hexagonal mesh.

The defect cell also has two sides with a different length L-(ΔL/2), specifically, the upper side and the lower side.

The defect cell also has two sides in an opposite direction when compared to the hexagonal cell. Thus, the two left sides are parallel each one to the two right sides of the hexagonal cell, and consequently also to the two right sides of the defect cell.

This defect cell is compatible and easily integrable into the uniform hexagonal waveguide mesh.

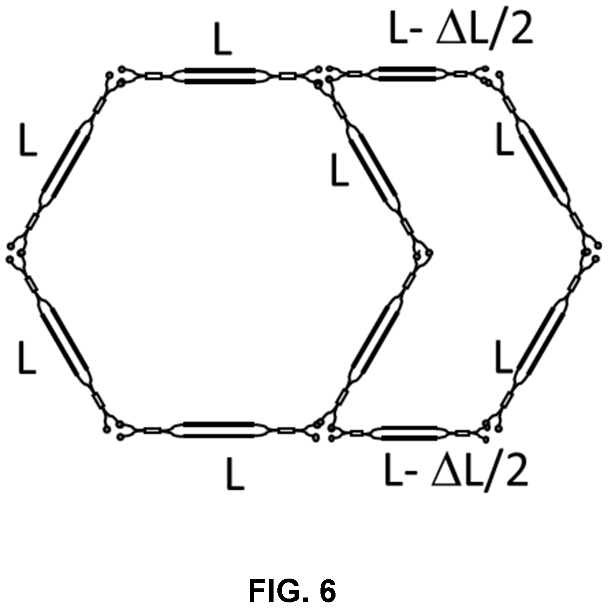

The Figure 6 also shows an example of a second preferred embodiment of the invention. In this case, the defect cell is similar to the defect cell shown in Figure 5 but the upper side and the lower side of the defect cell have a length equal to L+(ΔL/2). The defect cell is also connected to a hexagonal cell.

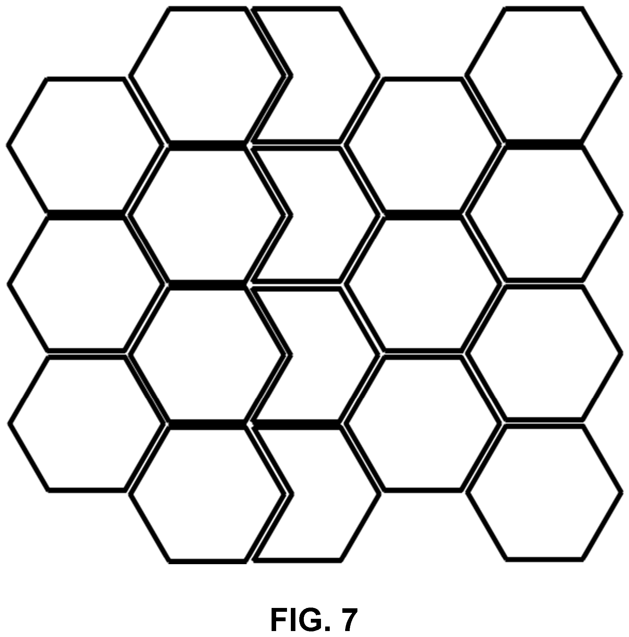

The Figure 7 shows an example of the second preferred embodiment of the invention previously defined wherein a row of defect cells is connected to multiple rows of hexagonal cells, being the row of defect cells incorporated into the waveguide mesh.

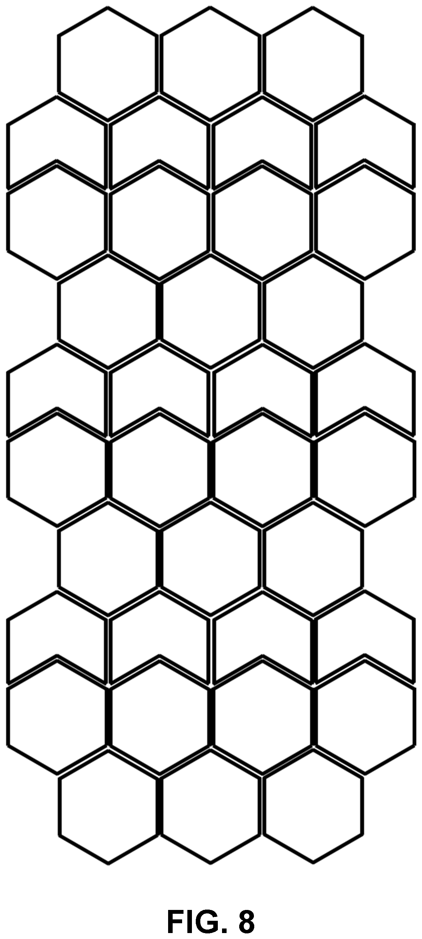

In the Figure 8, multiple rows of defect cells are connected to multiple rows of hexagonal cells in a periodic way, thus alternating groups of rows of defect cells with groups of rows of hexagonal cells.

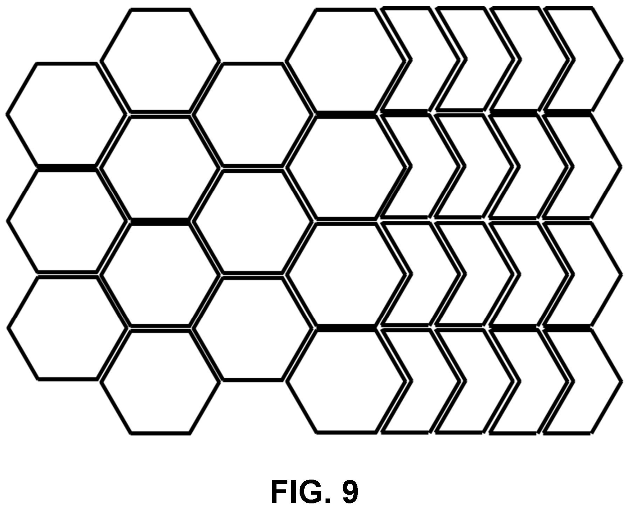

Figure 9 shows another example of the photonic waveguide mesh arrangement of the invention, wherein multiple rows of defect cells are connected between them, forming a first group, and said first group is connected to multiple rows of hexagonal cells, forming a second group.

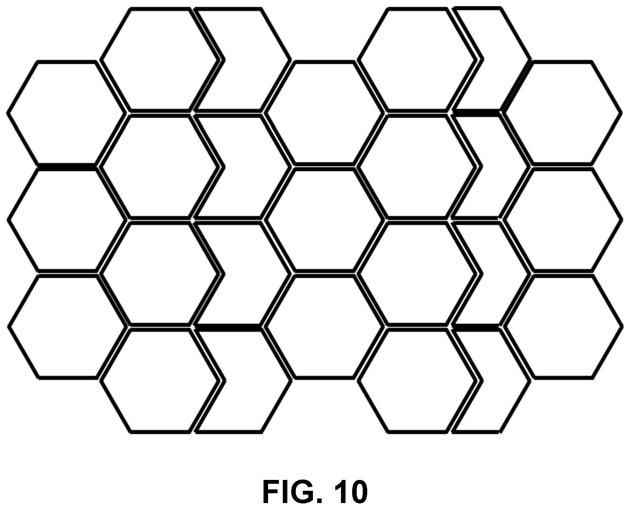

The Figure 10 shows another example wherein multiple rows of different defect cells are connected to multiple rows of hexagonal cells, thus alternating rows of hexagonal cells with rows of defect cells, having an upper side and a lower side of different lengths. In particular, in the case shown in figure 10, the upper side and a lower side of the rows of defect cells have a length equal to L+(ΔL/2) and L-(ΔL/2), respectively.

Alternatively, the cells could be connected forming columns instead of rows.

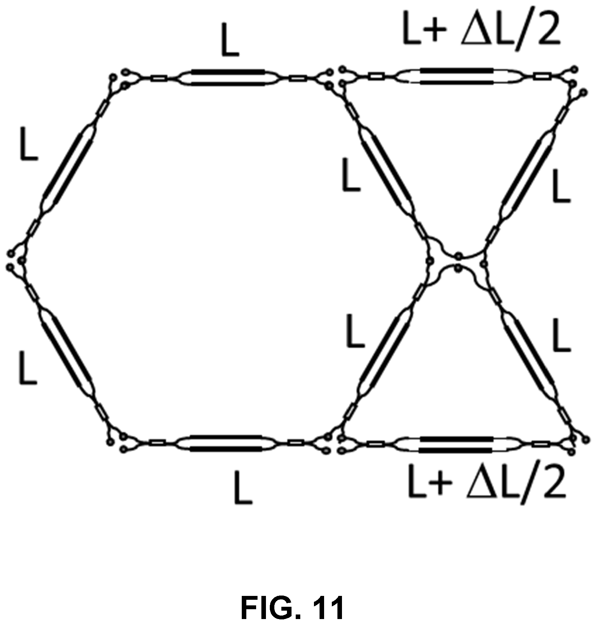

Figure 11 shows an example of a defect cell according to the second preferred embodiment of the invention, wherein the defect cell has a hourglass shape. Thus, in this case, the defect cell has the two right sides parallel to the two left sides of the hexagonal cell and the two left sides parallel to the two right sides of the hexagonal cell. The defect cell shown in Figure 11 is connected to a hexagonal cell.

In Figure 11, the left sides of the defect cell are connected to the right sides of the defect cell.

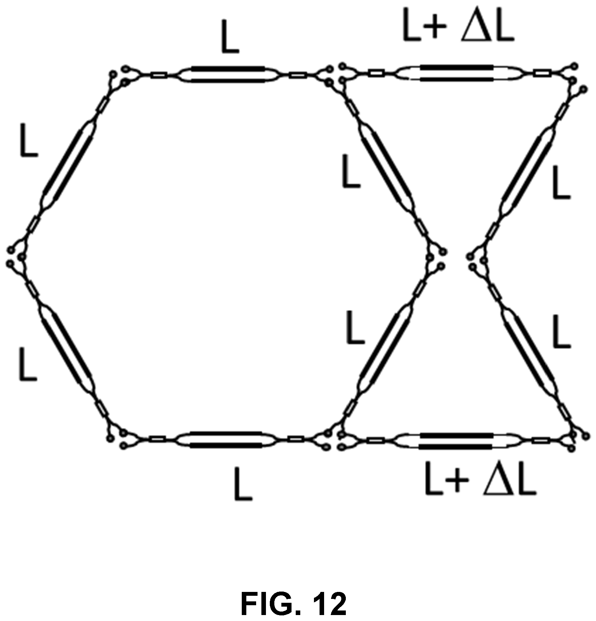

On the contrary, in Figure 12, a second type of hourglass defect cell is shown, wherein the left sides of the defect cell are not connected to the right sides of the defect cell.

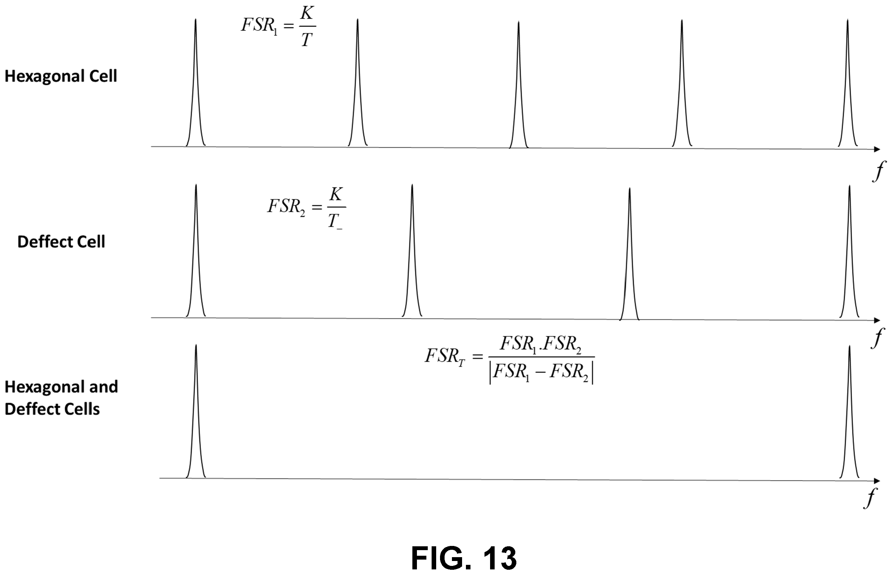

Figure 13 shows a comparison between the spectral domain response of an hexagonal cell, a defect cell and a combination of a hexagonal and a defect cell.

The Figure 13 shows how the Vernier effect allows to solve the problem of spectral period limitation by including the defect cells.

The individual cavities of the hexagonal and defect cells have slightly dissimilar Spectral periods or Free Spectral Range values (FSR₁ and FSR₂). When coupled only the common resonances to both cavities are enabled and this allows to extend the spectral period to a value given by: ${FSR}_{T} = \frac{{FSR}_{1} ⋅ {FSR}_{2}}{\left|{FSR}_{1}-{FSR}_{2}\right|}$

A typical achievable cell in silicon photonics has a side length Lₛ around 450 mm providing a propagation delay Tₛ around 11,5 psec. These values are fixed and limit the flexibility in the spectral and time domain responses of the circuits that can be implemented.

For instance, minimum length cavities L=6Lₛ provide a round trip of around 69 psec which results in a spectral period in the range of 14,8 GHz, which is not enough for broadband applications requiring at least 40 GHz or more. Similarly, the sampling rate which can be achieved is given by Tₛ, which is not enough for applications requiring delay precisions in the range of less than 10 psec.

Nevertheless, by using the photonic waveguide mesh arrangements according to the invention:
*if* ${FSR}_{1} = 0.75 ⋅ {FSR}_{2}$ *then* ${FSR}_{T} = 3 {FSR}_{1}$

In practice, this corresponds to increasing a typical 14,8 GHz FSR of a 2D uniform hexagonal waveguide mesh to 45GHz in the photonic waveguide mesh arrangement of the invention.

This is achieved by reducing the lengths of the "short" sides of the defect cell by a 12.5% (i.e from 450 mm to 394 mm), which is technologically very affordable.

In addition, the insertion of defect cells allows switching paths within the mesh with time propagation differences of *D_{T}* << *Ts*, thus solving as well the sampling time resolution limitation of the uniform waveguide mesh (in the example from 11,5 to 1,5 psec).

In addition, a similar effect can be obtained by introducing hexagonal split cells and quadrangular split cells.

The hexagonal split cells and the quadrangular split cells have the same shape and size as a non-defect cell, making them compatible and easily integrable into the uniform hexagonal waveguide mesh. Because of this, a mesh comprising one or more of the hexagonal split cells or quadrangular split cells would also have the same shape and size as the equivalent fully non-defect cell mesh.

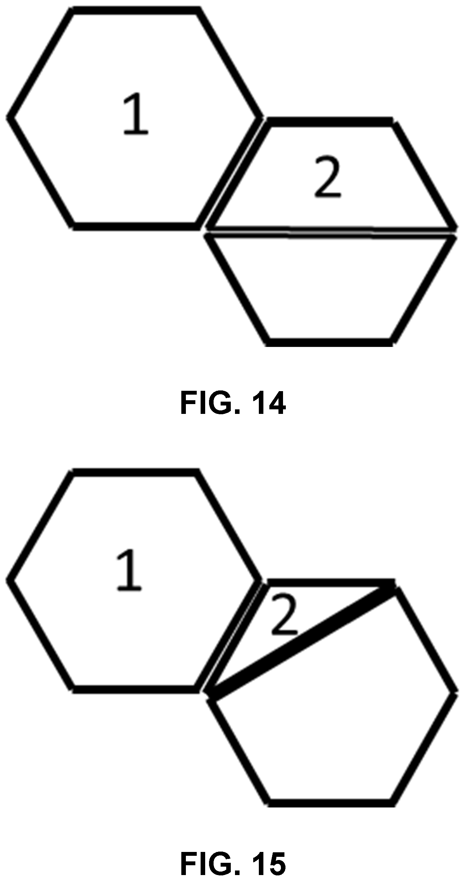

Figure 14 shows a connection of a hexagonal cell with a hexagonal split cell comprising one internal side forming two equal trapezoids. In this case, the length of the internal side is 2L and the perimeter of the hexagonal split cell would be equal to the sum of the perimeters of the two equal trapezoids: 5L.

In this case, the Free Spectral Range (FSR) of the combination of the hexagonal cell and the hexagonal split cell would be equal to: ${FSR}_{T} = \frac{{FSR}_{1} . {FSR}_{2}}{\left|{FSR}_{1}-{FSR}_{2}\right|} = \frac{K}{L}$ being 6 times bigger than the Free Spectral Range (FSR) of a single hexagonal cavity.

Figure 15 shows a first type of connection between a hexagonal cell and a hexagonal split cell, which comprises one internal side forming a triangle and a quadrilateral. In this case, the connection is made between the triangle of the hexagonal split cell and the hexagonal cell.

The length of the internal side is equal to √3L. Thus, the perimeter of the hexagonal split cell would be the sum of the perimeter of the triangle and the quadrilateral. The perimeter of the triangle would be (2+√3)L and the perimeter of the quadrilateral would be (4+√3)L.

In this case, the Free Spectral Range (FSR) of the combination of the hexagonal cell and the hexagonal split cell would be equal to: ${FSR}_{T} = \frac{{FSR}_{1} . {FSR}_{2}}{\left|{FSR}_{1}-{FSR}_{2}\right|} = \frac{K}{\left(4-\sqrt{3}\right) L}$ being 2,64 times bigger than the Free Spectral Range (FSR) of a single hexagonal cavity.

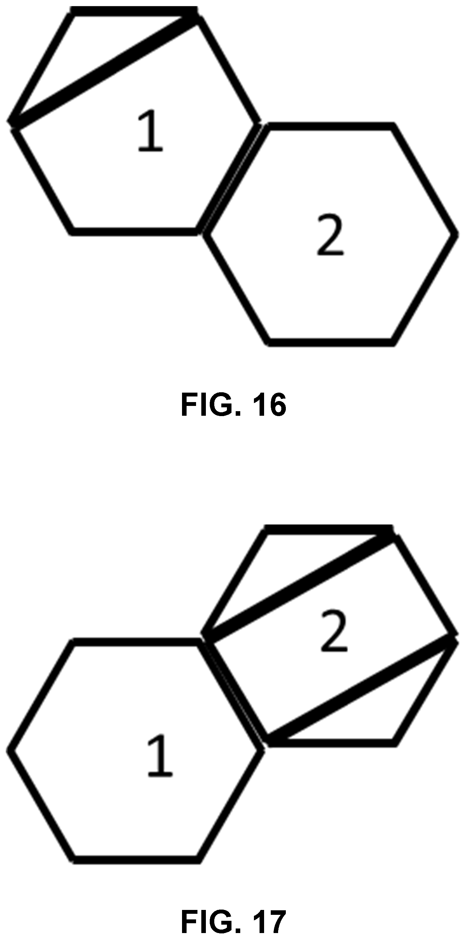

Figure 16 shows a second type of connection between a hexagonal cell and a hexagonal split cell, which comprises one internal side forming a triangle and a quadrilateral. In this case, the connection is made between the quadrilateral of the hexagonal split cell and the hexagonal cell.

The length of the internal side is equal to √3L. Thus, the perimeter of the hexagonal split cell would be the sum of the perimeter of the triangle and the quadrilateral. The perimeter of the triangle would be (2+√3)L and the perimeter of the quadrilateral would be (4+√3)L.

In this case, the Free Spectral Range (FSR) of the combination of the hexagonal cell and the hexagonal split cell would be equal to: ${FSR}_{T} = \frac{{FSR}_{1} . {FSR}_{2}}{\left|{FSR}_{1}-{FSR}_{2}\right|} = \frac{K}{\left(2-\sqrt{3}\right) L}$ being 22,7 times bigger than the Free Spectral Range (FSR) of a single hexagonal cavity.

Figure 17 shows a connection of a hexagonal cell with a hexagonal split cell comprising two internal sides forming two triangles and a rectangle. This cell presents two parallel internal sides.

The perimeter of the hexagonal split cell would be the sum of the perimeter of the triangles and the rectangle. The perimeter of each of the triangles is (2+√3)L and the perimeter of the rectangle is (2+2√3)L.

In this case, the Free Spectral Range (FSR) of the combination of the hexagonal cell and the hexagonal split cell would be equal to: ${FSR}_{T} = \frac{{FSR}_{1} . {FSR}_{2}}{\left|{FSR}_{1}-{FSR}_{2}\right|} = \frac{K}{\left(4-2\sqrt{3}\right) L}$ being 11,2 times bigger than the Free Spectral Range (FSR) of a single hexagonal cavity.

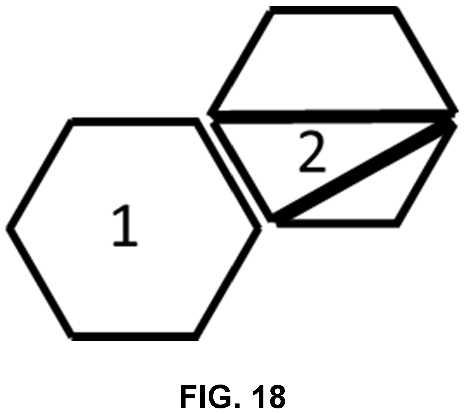

Figure 18 shows a connection of a hexagonal cell with a hexagonal split cell comprising two internal sides forming two triangles and a trapezoid.

The perimeter of the hexagonal split cell would be the sum of the perimeter of the triangles and the trapezoid. The perimeter of the trapezoid would be 5L, the perimeter of a first triangle would be (3+√3)L and the perimeter of a second triangle would be (2+√3)L.

In this case, the Free Spectral Range (FSR) of the combination of the hexagonal cell and the hexagonal split cell would be equal to: ${FSR}_{T} = \frac{{FSR}_{1} . {FSR}_{2}}{\left|{FSR}_{1}-{FSR}_{2}\right|} = \frac{K}{\left(3-\sqrt{3}\right) L}$ being 4,76 times bigger than the Free Spectral Range (FSR) of a single hexagonal cavity.

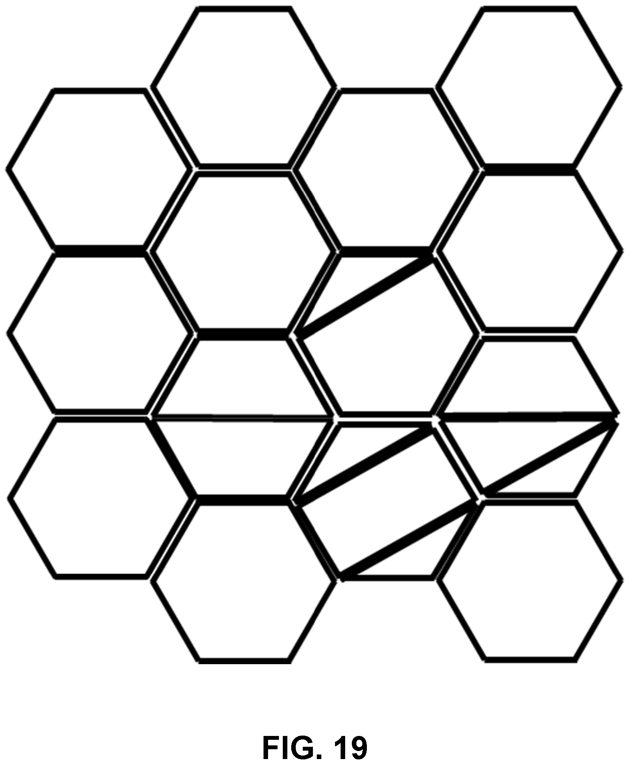

Figure 19 shows a photonic waveguide mesh arrangement comprising four hexagonal split cells representing the four types of hexagonal split cells already defined.

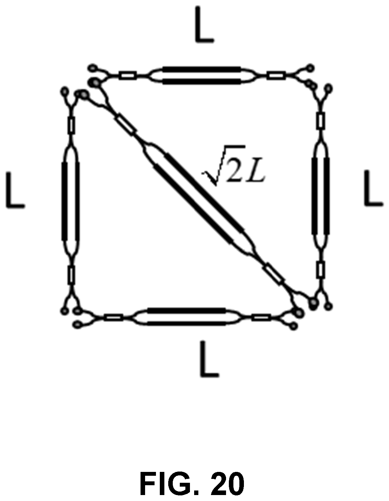

Figure 20 shows an example of a quadrangular split cell. In this case, the quadrangular split cell comprises an internal side, having a length equal to √2L, which splits the quadrangular split cell into two equal triangles. Thus, the perimeter of the quadrangular split cell would be equal to the sum of the equal triangles. The perimeter of each triangle would be (2+√2)L.

## Claims

1. Photonic waveguide mesh arrangement for a Field Programmable Photonic Gate Array (FPPGA) comprising:
- a plurality of hexagonal cells comprising two right sides of length L, an upper side of length L, a lower side of length L and two left sides of length L; and
- one or more defect cells connected to the comprising two right sides of length L parallel each one of them to each of the two right sides of the hexagonal cells or to each of the two left sides of the hexagonal cells, an upper side parallel to the upper side of the hexagonal cells, a lower side parallel to the lower side of the hexagonal cells and two left sides of length L parallel each one of them to each of the two right sides of the hexagonal cells or to each of the two left sides of the hexagonal cells;
wherein the length of the upper side and lower side of the defect cells is greater or lower than L.

2. Photonic waveguide mesh arrangement according to claim 1, wherein each side of the hexagonal cells and defect cells comprises two integrated waveguides connected by means of a balanced Mach-Zehnder interferometer (MZI).

3. Photonic waveguide mesh arrangement according to any of claims 1 to 2, wherein the defect cells are connected to the hexagonal cells and/or between them.

4. Photonic waveguide mesh arrangement according to claim 3, wherein the defect cells are connected between them forming a at least one row or column.

5. Photonic waveguide mesh arrangement according to claim 4, wherein a row or column of defect cells is connected to a row or column of hexagonal cells.

6. Photonic waveguide mesh arrangement according to claim 4, wherein a row or column of defect cells is connected to another row or column of defect cells.

7. Photonic waveguide mesh arrangement according to claim 4, wherein one or more rows or columns of defect cells are connected to one or more rows or columns of hexagonal cells in a periodic basis.

8. Photonic waveguide mesh arrangement according to any of claims 4 to 7, wherein the defect cells of each of the rows or columns of defect cells are defect cells with the length of the upper side and lower side greater than L or with the length of the upper side and lower side lower than L.

9. Photonic waveguide mesh arrangement according to any of claims 4 to 8, wherein the defect cells of at least one row or column of defect cells have:
- the two right sides parallel to the two left sides of the hexagonal cells and
- the two left sides parallel to the two right sides of the hexagonal cells;
and wherein the row or column of defect cells is connected to a row or column of hexagonal cells or a row or column of defect cells.

10. Photonic waveguide mesh arrangement for a Field Programmable Photonic Gate Array (FPPGA) comprising:
- a plurality of quadrangular cells comprising two lateral sides of length L, an upper side of length L and a lower side of length L; and
- one or more defect cells comprising two lateral sides of length L parallel to the lateral sides of the quadrangular cells, an upper side and a lower side parallel to the upper side and a lower side of the quadrangular cells;
wherein the length of the upper side and lower side of the defect cells could be greater or lower than L.

11. Photonic waveguide mesh arrangement according to claim 10, wherein the defect cells are connected between them forming a at least one row or at least one column.

12. Photonic waveguide mesh arrangement according to claim 11, wherein a row or column of defect cells is connected to a row or column of quadrangular cells.

13. Photonic waveguide mesh arrangement according to claim 11, wherein a row or column of defect cells is connected to another row or column of defect cells.

14. Photonic waveguide mesh arrangement for a Field Programmable Photonic Gate Array (FPPGA) comprising:
- a plurality of hexagonal cells; and
- one or more hexagonal split cells comprising six sides of length L and six vertexes, wherein the sides connect consecutive vertexes;
wherein the hexagonal split cells further comprise one or more internal sides connecting no-consecutive vertexes.

15. Photonic waveguide mesh arrangement according to claim 14, wherein the hexagonal split cells comprise one internal side connecting two non-consecutive vertexes, forming a triangle and a pentagon or two quadrilaterals.

16. Photonic waveguide mesh arrangement according to claim 14, wherein the hexagonal split cells comprise two internal sides, which do not intersect each other, and wherein each internal side connects two non-consecutive vertexes, forming two triangles and a quadrilateral.

17. Photonic waveguide mesh arrangement according to claim 14, wherein the hexagonal split cells are connected to the hexagonal cells or between them in different positions, resulting each position in a different Free Spectral Range value.

18. Photonic waveguide mesh arrangement according to claim 1, wherein each side and each internal side of the hexagonal cells and hexagonal split cells comprises two integrated waveguides connected by means of a balanced Mach-Zehnder interferometer (MZI).

19. Photonic waveguide mesh arrangement for a Field Programmable Photonic Gate Array (FPPGA) comprising:
- a plurality of quadrangular cells; and
- one or more quadrangular split cells comprising four sides of length L and four vertexes, wherein the sides connect consecutive vertexes;
wherein the quadrangular split cells further comprise one internal side connecting no-consecutive vertexes.

20. Field Programmable Photonic Gate Array (FPPGA) comprising a photonic waveguide mesh arrangement according to any of claims 1 to 19.
